(19) Europäisches Patentamt
European Patent Office
Office européen des brevets

(11) **EP 4 244 813 B1**

(12) **EUROPEAN PATENT SPECIFICATION**

(45) Date of publication and mention
of the grant of the patent:
**19.06.2024 Bulletin 2024/25**

(21) Application number: **20853576.5**

(22) Date of filing: **14.12.2020**

(51) International Patent Classification (IPC):
***G06T 9/00*** *(2006.01)*

(52) Cooperative Patent Classification (CPC):
**G06T 9/004; G06T 9/001; G06T 9/40; H04N 19/30**

(86) International application number:
**PCT/RU2020/000686**

(87) International publication number:
**WO 2022/131947 (23.06.2022 Gazette 2022/25)**

(54) **DEVICES AND METHODS FOR SCALABLE CODING FOR POINT CLOUD COMPRESSION**

GERÄTE UND VERFAHREN FÜR DIE SKALIERBARE KOMPRIMIERUNG VON PUNKTWOLKEN

DISPOSITIFIS ET MÉTHODES POUR LA COMPRESSION ÉCHELONNABLE DE NUAGES À POINTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.09.2023 Bulletin 2023/38**

(73) Proprietor: Huawei Technologies Co., Ltd.
**Shenzhen, Guangdong 518129 (CN)**

(72) Inventors:
- **RUFITSKIY, Vasily Alexeevich**
  **Shenzhen Guangdong, 518129 (CN)**
- **FILIPPOV, Alexey Konstantinovich**
  **Shenzhen Guangdong, 518129 (CN)**

(74) Representative: **Maiwald GmbH**
**Engineering**
**Elisenhof**
**Elisenstrasse 3**
**80335 München (DE)**

(56) References cited:
**EP-A1- 3 654 293**

- **JULIUS KAMMERL ET AL: "Real-time compression of point cloud streams", ROBOTICS AND AUTOMATION (ICRA), 2012 IEEE INTERNATIONAL CONFERENCE ON, IEEE, 14 May 2012 (2012-05-14), pages 778-785, XP032450378, DOI: 10.1109/ICRA.2012.6224647 ISBN: 978-1-4673-1403-9**
- **"G-PCC codec description", 131. MPEG MEETING; 20200629 - 20200703; ONLINE; (MOTION PICTURE EXPERT GROUP OR ISO/IEC JTC1/SC29/WG11), , no. n19525 10 October 2020 (2020-10-10), XP030292244, Retrieved from the Internet: URL:https://dms.mpeg.expert/doc_end_user/d ocuments/131_OnLine/wg11/w19525.zip w19525.docx [retrieved on 2020-10-10]**

**Description**

TECHNICAL FIELD

The present disclosure relates to image processing in general. More specifically, the disclosure relates to an encoding apparatus and method for lossless encoding a point cloud and a decoding apparatus and method for lossless decoding, i.e. reconstructing a point cloud with scalable coding.

BACKGROUND

Point clouds have been considered as a candidate format for transmission, in particular, of two-dimensional (2D) or three-dimensional (3D) data, either captured by 3D scanners, LIDAR sensors, or used in popular applications such as Virtual Reality/Augmented Reality (VR/AR). Point clouds are a set of points in space. Besides the spatial position, each point usually has associated attributes, such as color or even reflectance and temporal timestamps. In order to obtain a high-fidelity representation of the target objects, devices capture point clouds in the order of thousands or even millions of points. Moreover, for dynamic scenes used, for instance, in VR/AR applications, every single frame often has a unique dense point cloud, which results in the transmission of several millions of point clouds per second. For a viable transmission of such a large amount of data, compression is often applied.

Often the positions of the points of a point cloud do not have integer coordinate values, because the points being compressed, as described above, may have be generated by visual search algorithms or by real-world 3D capturing (e.g., by means of 3D scanners, such as radar or lidar devices). These non-integer point positions could represent positions of some vertices of a 3D object and have correspondence with real-world length units (e.g. meters, centimeters, millimeters, etc.). Hence, the positions of the points of a point cloud may have fractional parts, wherein the size of these fractional parts usually depends on the accuracy that is required by a specific application.

The prior art document "Real-time compression of point cloud streams", Robostics and automation conference paper from Julius Kammerl et Al. published on 14-05-2012 discloses that voxel origins are used as starting point for refinement vectors.

SUMMARY

It is an object of the invention to provide devices and methods for encoding and decoding a point cloud with an improved scalable coding.

The foregoing and other objects are achieved by the subject matter of the independent claims. Further implementation forms are apparent from the dependent claims, the description and the figures.

According to a first aspect an encoding apparatus for lossless compression of a point cloud in a portion of a multi-dimensional space, in particular 2D or 3D space is disclosed. The encoding apparatus comprises a processing circuitry configured to partition the multi-dimensional space into a plurality of cells, wherein each point of the point cloud has a position within one of the plurality of cells and wherein each cell of the plurality of cells defines a primary reference position and at least one secondary reference position.

The processing circuitry of the encoding apparatus is further configured to determine for each point of the point cloud a refinement vector, wherein the refinement vector defines depending on the position of the point the difference between the position of the point and the primary reference position or the difference between the position of the point and the at least one secondary reference position.

Moreover, the processing circuitry is configured to encode the point cloud for obtaining an output geometry bitstream by encoding for each point of the point cloud depending on its position either an identifier of the primary reference position or the at least one secondary reference position and encoding the refinement vector.

In a further possible implementation form of the first aspect, the processing circuitry is configured to determine, i.e. select for each point of the point cloud either the identifier of the primary reference position or the at least one secondary reference position and the refinement vector based on the distance of the position of the point to the primary reference position and the distance of the position of the point to the at least one secondary reference position.

In a further possible implementation form of the first aspect, each refinement vector comprises a plurality of components, wherein the processing circuitry is configured to encode for each point of the point cloud the components of the refinement vector.

In a further possible implementation form of the first aspect, for each point of the point cloud each component of the refinement vector comprises a mantissa value, wherein the processing circuitry is configured to encode the mantissa value with a number of bits, wherein the number of bits depends on a number of bits required to represent a coordinate $p_a$ of the at least one secondary reference position.

In a further possible implementation form of the first aspect, the number of bits of the mantissa value $m_a$ depends

on the number of bits to represent the coordinate $p_a$ of the at least one secondary reference position according to the following equation:

$$m_a = N - \lfloor \log_2 p_a \rfloor,$$

wherein N denotes the number of bits for a fixed-point representation of a point of the point cloud.

In a further possible implementation form of the first aspect, for each point of the point cloud each component of the refinement vector comprises a sign part (or short "sign"), an integer part and a fractional part.

In a further possible implementation form of the first aspect, the processing circuitry is configured to encode the sign, e.g. a sign bit by using an equiprobable model for arithmetic coding.

In a further possible implementation form of the first aspect, the processing circuitry is configured to encode the sign, e.g. the sign bit using a probability model taking into account a difference of the maximum absolute values of the components for positive and negative sign values.

In a further possible implementation form of the first aspect, the processing circuitry is configured to encode the integer part using a unary code.

In a further possible implementation form of the first aspect, the processing circuitry is configured to encode the fractional part using a fixed-length code.

In a further possible implementation form of the first aspect, the primary reference position is located at a geometric center of each cell.

In a further possible implementation form of the first aspect, the multi-dimensional space is a 2D space and each cell has a square or rectangular shape, wherein the at least secondary reference position is located on a diagonal of the cell in a respective quadrant of the cell.

In a further possible implementation form of the first aspect, the multi-dimensional space is a 3D space and the at least one cell has a cube shape, wherein at least one of the one or more secondary reference positions is located on a diagonal of the cell in a respective octant of the cell.

According to a second aspect an encoding method for lossless compression of a point cloud in a multi-dimensional space, in particular 2D or 3D space is disclosed. The encoding method comprises the following steps:

partitioning the multi-dimensional space into a plurality of cells, wherein each point of the point cloud has a position within one of the plurality of cells and wherein each cell of the plurality of cells defines a primary reference position and at least one secondary reference position;

determining for each point of the point cloud a refinement vector, wherein the refinement vector defines depending on the position of the point the difference between the position of the point and the primary reference position or the difference between the position of the point and the at least one secondary reference position; and

encoding the point cloud for obtaining an output bitstream by encoding for each point of the point cloud depending on its position an identifier either of the primary reference position or the at least one secondary reference position and encoding the refinement vector.

The encoding method according to the second aspect of the present disclosure can be performed by the encoding apparatus according to the first aspect of the present disclosure. Thus, further features of the encoding method according to the second aspect of the present disclosure result directly from the functionality of the encoding apparatus according to the first aspect of the present disclosure as well as its different implementation forms described above and below.

According to a third aspect a decoding apparatus for lossless decompression of a bitstream into a point cloud in a multi-dimensional space, in particular 2D or 3D space is disclosed. The multi-dimensional space is partitioned into a plurality of cells, wherein each point of the point cloud has a position within one of the plurality of cells and wherein each cell of the plurality of cells defines a primary reference position and at least one secondary reference position.

The decoding apparatus comprises a processing circuitry configured to decode for each point of the point cloud an identifier of either the primary reference position or the at least one secondary reference position within a respective cell of the plurality of cells and to decode a refinement vector, wherein the refinement vector defines depending on a position of the point either the difference between the position of the point and the primary reference position or the difference between the position of the point and the at least one secondary reference position.

The processing circuitry is further configured to determine for each point of the point cloud the position of the point by adding the refinement vector depending on the identifier either to the primary reference position or the at least one secondary reference position within a respective cell of the plurality of cells.

According to a fourth aspect a decoding method for lossless decompression of a geometry bitstream into a point cloud in a multi-dimensional space, in particular a 2D or 3D space is disclosed. The multi-dimensional space is partitioned into a plurality of cells, wherein each point of the point cloud has a position within one of the plurality of cells and wherein each cell of the plurality of cells defines a primary reference position and at least one secondary reference position. The decoding method comprises the following steps:

decoding for each point of the point cloud an identifier of the primary reference position or the at least one secondary reference position within a respective cell of the plurality of cells and a refinement vector,
wherein the refinement vector defines depending on a position of the point the difference between the position of the point and the primary reference position or the difference between the position of the point and the at least one secondary reference position; and
determining for each point of the point cloud the position of the point by adding the refinement vector depending on the identifier to the primary reference position or the at least one secondary reference position within a respective cell of the plurality of cells.

The decoding method according to the fourth aspect of the present disclosure can be performed by the decoding apparatus according to the third aspect of the present disclosure. Thus, further features of the decoding method according to the fourth aspect of the present disclosure result directly from the functionality of the decoding apparatus according to the third aspect of the present disclosure as well as its different implementation forms described above and below.

According to a fifth aspect a computer program product is provided, comprising program code which causes a computer or a processor to perform the encoding method according to the second aspect or the decoding method according to the fourth aspect, when the program code is executed by the computer or the processor.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Figure 1 is a schematic diagram illustrating a point cloud encoding apparatus and decoding apparatus according to an embodiment;

Figure 2 is a schematic diagram illustrating further details of the encoding apparatus according to an embodiment;

Figure 3 is a schematic diagram illustrating further details of the decoding apparatus according to an embodiment;

Figure 4 is schematic diagram of a plurality of 2D cells implemented by an encoding apparatus and a decoding apparatus according to an embodiment;

Figure 5 is schematic diagram illustrating further details of one of a plurality of 2D cells implemented by an encoding apparatus and a decoding apparatus according to an embodiment;

Figure 6 is a flow diagram illustrating processing steps implemented by an encoding apparatus and a decoding apparatus according to an embodiment;

Figure 7 is schematic diagram illustrating a bit sequence for encoding a position of a point of a point cloud by an encoding apparatus according to an embodiment;

Figure 8 is schematic diagram illustrating a bit sequence for encoding a refinement vector of a point of a point cloud by an encoding apparatus according to an embodiment;

Figure 9 is schematic diagram illustrating further details of one of a plurality of 2D cells implemented by an encoding apparatus and a decoding apparatus according to an embodiment;

Figure 10 is a flow diagram illustrating a point cloud encoding method according to an embodiment; and

Figure 11 is a flow diagram illustrating a point cloud decoding method according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

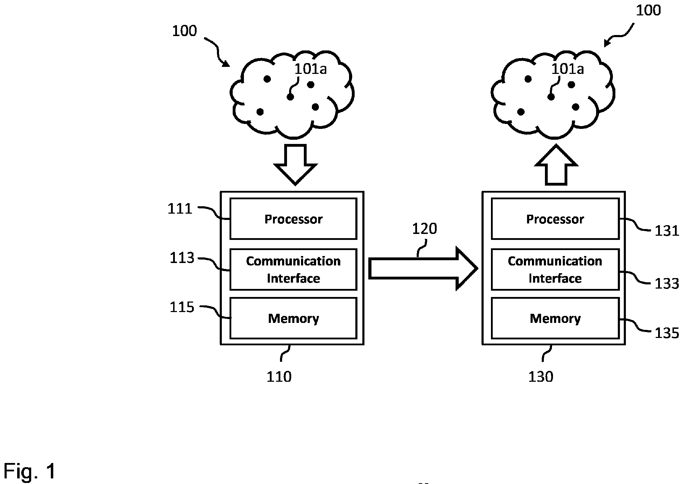

Figure 1 shows an encoding apparatus 110 and a decoding apparatus 130 according to an embodiment. The encoding apparatus 110 is configured to encode, i.e. compress a point cloud 100 with a plurality of points 101 into a bitstream 120. Each of the plurality of points 101 of the point cloud 100 may be associated with a position, e.g. 2D or 3D coordinates and one or more attributes. The bitstream 120 may comprise a geometry bitstream 120a and an attribute bitstream 120b. The decoding apparatus 130 is configured to decode, i.e. decompress the bitstream into a reconstructed point cloud 100 comprising a plurality of reconstructed points 101.

As illustrated in figure 1, the encoding apparatus 110 comprises a processing circuitry or processor 111 for encoding the point cloud 100 into the bitstream 120. The processor 111 may be implemented in hardware and/or software, which when executed causes the encoding apparatus 110 to perform the functions and methods described herein. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. Moreover, the encoding apparatus 110 may comprise a communication interface 113, such as a wireless communication interface 113 for transmitting the bitstream 120 to the decoding apparatus 130 as well as an electronic memory 115 for storing data, in particular the bitstream 120. Likewise, the decoding apparatus 130 comprises a processing circuitry or processor 131 for reconstructing the point cloud 100 based on the bitstream 120. Moreover, the decoding apparatus 130 may comprise a communication interface 133, such as a wireless communication interface 133 for receiving the bitstream 120 from the encoding apparatus 110 as well as an electronic memory 135 for storing data, in particular the reconstructed point cloud 100.

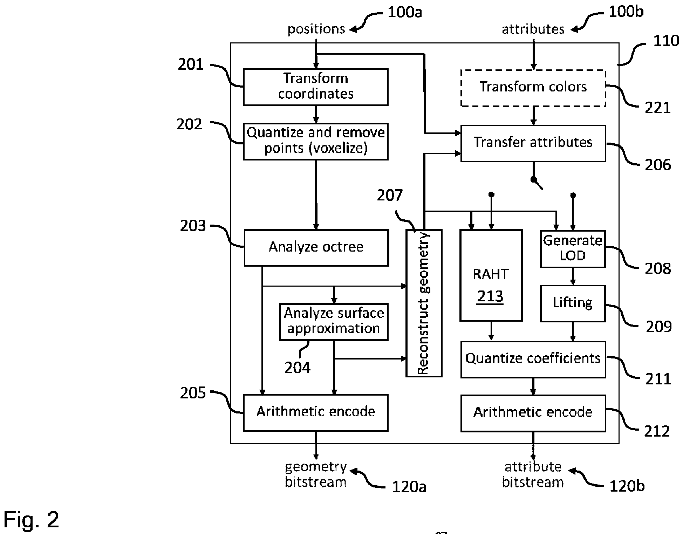

Figure 2 shows the encoder, i.e. encoding apparatus 110 according to an embodiment that produces a geometry bitstream 120a and an attribute bitstream 120b based on the positions 100a and attributes 110b of the input point cloud 100. In an embodiment, the encoder 110 may comprise one or more of the processing blocks shown in figure 2, which may be implemented in hardware and/or software, for instance, by means of the processing circuitry 111 of the encoder 110 shown in figure 1.

The processing block 201 is performed for the set of original point positions 100a to remove bias (minimum value of points' position within a cloud could be non-zero) and convert the floating-point representation of the positions 100a to an integer representation. More specifically, a parameter T ("translation") may be used to removes bias (so that the minimal value of each coordinate within the output point cloud is zero) and scaling parameters may be used to convert the floating-point representation of the positions 100a of the points into a fixed-point representation, as will be described in the following in more detail.

The original point positions 100a are generally represented by floating point numbers and need not have any structure, lying in an original (or world) coordinate system denoted as $X_n^{orig}$, n = 1, ..., N. Internal (or frame) coordinates $X_n^{int}$, n = 1, ..., N, may be obtained by the processing block 201 based on the original coordinates by the coordinate transformation

$$X_n = \left(X_n^{orig} - T\right)/s,$$

where $T = (t_x, t_y, t_z)$. The parameters T and s may be selected such that the point positions $X_n^{int}$, n = 1, ..., N, lie in a bounding cube $[0,2^d)^3$ for some non-negative integer parameter d. Point positions in the internal coordinate system that have been compressed (i.e. encoded) and decompressed (i.e. decoded) are denoted herein as $\hat{X}_n$, n = 1, ... , $N_{out}$, where N is the number of points of the original point cloud 100 and $N_{out}$ is the number of points in the decoded point cloud 100. As will be appreciated, $N_{out}$ may not be the same as N. The decoded point positions in the original coordinate system may be obtained from the decoded point positions in the internal coordinate system by the following coordinate transformation:

$$\hat{X}_n^{orig} = s\hat{X}_n + T.$$

This can alternatively be expressed by the following homogeneous transformation from internal to original coordinates:

$$\begin{bmatrix} \hat{x}_n^{orig} \\ \hat{y}_n^{orig} \\ \hat{z}_n^{orig} \\ 1 \end{bmatrix} = \begin{bmatrix} s & 0 & 0 & t_x \\ 0 & s & 0 & t_y \\ 0 & 0 & s & t_z \\ 0 & 0 & 0 & 1 \end{bmatrix} \begin{bmatrix} \hat{x}_n \\ \hat{y}_n \\ \hat{z}_n \\ 1 \end{bmatrix}.$$

The next processing block 202 "Quantize and remove points (voxelize)" may perform the following processing steps. The point positions in the internal coordinate system are rounded. More specifically, if $X_n^{int}$ denotes a point position in the internal coordinate system, then its representation as a non-negative d-bit integer is

$$X_n = Round(X_n^{int}),$$

where Round(·) is the function that rounds the components of a vector to the nearest integer. After such a quantization, there may be multiple points with the same position (referred to as duplicate points). These duplicate points may be optionally removed. If enabled, points with the same quantized coordinates are removed. Multiple points with the same quantized position and different attributes may be merged in a single point. The process of position quantization, duplicate point removal, and assignment of attributes to the remaining points is called voxelization, which may be considered as the process of grouping points together into voxels. The set of voxels may be the unit cubes [i - 0.5, i + 0.5) × [j - 0.5, j + 0.5) × [k - 0.5, k + 0.5) for integer values of i, j, and k between 0 and $2^d$ - 1. Specifically, the locations of all the points within a voxel may be quantized to the voxel centre, and the attributes of all the points within the voxel may be combined (e.g., averaged) and assigned to the voxel. A voxel is said to be occupied if it contains any point of the point cloud 100.

If an Octree geometry codec is used, then the geometry encoding proceeds as follows. A processing block 203 ("Analyze octree"), first, may define a cubical axis-aligned bounding box B by the two extreme points (0,0,0) and ($2^d$, $2^d$, $2^d$). An octree structure may then be built by recursively subdividing bounding box B. At each stage, a cube may be subdivided into a sub-cubes. An 8-bit code, named an occupancy code, may then be generated by associating a 1-bit value with each sub-cube in order to indicate whether it contains points (i.e., full and has value 1) or not (i.e., empty and has value 0). Only full sub-cubes with a size greater than 1 (i.e., non-voxels) are further subdivided. Since points may be duplicated, multiple points may be mapped to the same sub-cube of size 1 (i.e., the same voxel). In order to handle such a situation, the number of points for each sub-cube of dimension 1 may also be arithmetically encoded by the processing block 205. In an embodiment, the arithmetic encoder provided by the processing block 205 may be used for encode all information in the geometry bitstream 120a.

In order to guarantee encoder/decoder synchronization, the point order defined by the decoding process may be used during the level of detail generation process. The processing block 204 ("Analyze surface approximation") may set the block sizes to 2 × 2 × 2 or larger, and the collection of voxels within the block may be represented by some model. The geometry may be represented within each block as a surface that intersects each edge of the block at most once. Since there are 12 edges of a block, there can be at most 12 such intersections within a block. Each such intersection is called a vertex. A vertex along an edge is detected if and only if there is at least one occupied voxel adjacent to the edge among all blocks that share the edge. The position of a detected vertex along an edge may be the average position along the edge of all such voxels adjacent to the edge among all blocks that share the edge.

The processing block 204 may be used to encode a part of octree that is built by processing block 203. The output of processing block 204 (surface parameters) may be encoded by the processing block 205 using entropy coding as follows.

Vertices, nominally being intersections of a surface with edges of a block, are shared across neighbouring blocks, not only guaranteeing continuity across blocks of the reconstructed surface, but also reducing the number of bits required to code the collection of vertices. The set of vertices may be coded in two steps. In a first processing stage implemented by the processing block 205, the set of all the unique edges (or segments) of occupied blocks is computed, and a bit vector (or segment indicator) determines which segments contain a vertex and which do not. In a second processing stage implemented by the processing block 205, for each segment that contains a vertex, the position of the vertex along the segment is uniformly scalar quantized to a small number of levels (typically, but not necessarily equal to the block width if the geometric spatial resolution is desired to approximate the voxel resolution). The segment indicators and the vertex positions are entropy coded by an arithmetic coder implemented by the processing block 205. Thus, the geometry bitstream 120a itself may be a compound bitstream comprising octree, segment indicator, and vertex position bitstreams.

The processing block 207 of the encoder 110 is configured to reconstruct point positions in the same order and to the same values as it would be performed by the decoder, i.e. the decoding apparatus 130 when processing, i.e. decoding the geometry bitstream 120a. Each point may have a set of associated values, i.e. each of the values corresponds to a point parameter or attribute, such as color, transparency, etc.

The encoder 110 may comprise a processing block 206 "Transfer attributes" (also referred to as "recolouring"). Given the input point cloud positions/attributes and the reconstructed positions $(\tilde{X}_i)_{i=0...N_{rec}-1}$, the purpose of the processing block 206 is to determine the attribute values that minimize the attribute distortions. In an embodiment, the processing block 206 of the encoder 110 may implement the following processing steps:

- Let $(X_i)_{i=0...N-1}$ and $(\tilde{X}_i)_{i=0...N_{rec}-1}$ be the input and the reconstructed positions, respectively.
- Let $N$ and $N_{rec}$ be the number of points in the original point cloud 100 and the reconstructed point cloud 100, respectively.

If duplicated points are merged, then $N_{rec} < N$, otherwise $N_{rec} = N$.

- For each point $\tilde{X}_i$ in the reconstructed point cloud 100, let $X_i^*$ be its nearest neighbour in the original point cloud 100 and $a_i^*$ the attribute value associated with $X_i^*$.
- For each point $\tilde{X}_i$ in the reconstructed point cloud 100', let $\mathbb{Q}^+(i) = (X_i^+(h))_{h \in \{1,...,H(i)\}}$ be the set of points in the original point cloud 100 that share $\tilde{X}_i$ as their nearest neighbour in the reconstructed point cloud 100, wherein $H(i)$ is the number of elements in $\mathbb{Q}^+(i)$, and $X_i^+(h)$ is one of the elements of $\mathbb{Q}^+(i)$. Note that $\mathbb{Q}^+(i)$ could be empty or could have one or multiple elements.
- If $\mathbb{Q}^+(i)$ is empty, then the attribute value $a_i^*$ is associated with the point $\tilde{X}_i$.
- If $\mathbb{Q}^+(i)$ is not empty, then the attribute value $\tilde{\alpha}_i$ associated with the point $\tilde{X}_i$ may be determined based on the following equation:

$$\tilde{a}_i = \frac{1}{H(i)} \sum_{h=1}^{H(i)} a_i^+(h),$$

where the attribute value $a_i^+$ is associated with the point $\tilde{X}_i$ of the set of points $\mathbb{Q}^+(i)$.

The encoder 110 may further comprise a processing block 213 ("RAHT"; Region Adaptive Haar Transform) configured to transform a list of attributes $A_n$, $n = 1, ..., N$, which is an output of processing block 206 into a list of transform coefficients $T_n$, $n = 1, ..., N$, given a list of associated voxel locations $(x_n, y_n, z_n)$, $n = 1, ..., N$, as side information, and to invert the transform. In an embodiment, the processing block 213 may be configured to perform RAHT and its inverse with respect to a hierarchy defined by the Morton codes of the voxel locations. The Morton code of $d$-bit non-negative integer coordinates $x$, $y$, and $z$ is a $3d$-bit non-negative integer obtained by interleaving the bits of $x$, $y$, and $z$. More specifically, the Morton code $M = morton(x, y, z)$ of non-negative $d$-bit integers coordinates, i.e.

$$x = \sum_{\ell=1}^{d} 2^{d-\ell} x_\ell, \qquad y = \sum_{\ell=1}^{d} 2^{d-\ell} y_\ell, \qquad z = \sum_{\ell=1}^{d} 2^{d-\ell} z_\ell,$$

where $x_\ell, y_\ell, z_\ell \in \{0,1\}$ are the bits of $x$, $y$, and $z$ from $\ell = 1$ (high order) to $\ell = d$ (low order), may be the non-negative $3d$-bit integer

$$M = \sum_{\ell=1}^{d} 2^{3(d-\ell)} (4x_\ell + 2y_\ell + z_\ell) = \sum_{\ell'=1}^{3d} 2^{3d-\ell'} m_{\ell'},$$

where $m_{\ell'} \in \{0,1\}$ are the bits of $M$ from $\ell' = 1$ (high order) to $\ell' = 3d$ (low order).

Let $prefix_{\ell'}(M) = \lfloor 2^{-(3d-\ell')} M \rfloor$ denote the $\ell'$ -bit prefix of $M$. Let m be such a prefix. Define the block at level $\ell'$ with prefix m to be the set of all points $(x, y, z)$ for which $m = prefix_{\ell'}(morton(x, y, z))$. Two blocks at level $\ell'$ are considered to be sibling blocks if they have the same $(\ell' - 1)$-bit prefix. The union of two sibling blocks at level $\ell'$ is a block at level $(\ell' - 1)$ called their parent block. The RAHT (Region Adaptive Haar Transform) of the sequence $A_n$, $n = 1, ..., N,$ and its inverse as implemented by the processing block 213 may be defined recursively as follows.

Let $A_n$ be the attribute of a point and let $T_n$ be its transform. Then $T_n = A_n$. Consider two sibling blocks and their parent block. Let $(A_{01}, A_{02}, ... , A_{0w_0})$ and $(A_{11}, A_{12}, ... , A_{1w_1})$ be the attributes of the points $(x_n, y_n, z_n)$ in the sibling blocks, listed in increasing Morton order, and let $(T_{01}, T_{02}, ..., T_{0w_0})$ and $(T_{11}, T_{12}, ... , T_{1w_1})$ be their respective transforms. Similarly, let $(A_1, A_2, ... , A_{w_0+w_1})$ be the attributes of all points $(x_n, y_n, z_n)$ in their parent block, listed in increasing Morton order, and let $(T_1, T_2, ... , T_{w0+w1})$ be its transform. Then,

$$(T_1, T_2, ..., T_{w_0}, T_{w_0+1}, T_{w_0+2}, ..., T_{w_0+w_1}) = (aT_{01} + bT_{11}, T_{02}, ..., T_{0w_0}, -bT_{01} + aT_{11}, T_{12}, ..., T_{1w_1}),$$

$$(T_{01}, T_{02}, ..., T_{0w_0}) = (aT_1 - bT_{w_0+1}, T_2, ..., T_{w_0}),$$

$$(T_{11}, T_{12}, ..., T_{1w_1}) = (bT_1 + aT_{w_0+1}, T_{w_0+2}, ..., T_{w_0+w_1}),$$

where $a = \sqrt{\frac{w_0}{w_0+w_1}}$ and $b = \sqrt{\frac{w_1}{w_0+w_1}}$ . In other words, in an embodiment, the transform of the parent block is the concatenation of the two sibling blocks, with the exception that the first (DC) components of the transforms of the two sibling blocks are replaced by their weighted sum and difference, and inversely the transforms of the two sibling blocks are copied from the first and last parts of the transform of the parent block, with the exception that the DC components of the transforms of the two sibling blocks are replaced by their weighted difference and sum, namely

$$\begin{bmatrix} T_1 \\ T_{w_0+1} \end{bmatrix} = \begin{bmatrix} a & b \\ -b & a \end{bmatrix} \begin{bmatrix} T_{01} \\ T_{11} \end{bmatrix}$$

and

$$\begin{bmatrix} T_{01} \\ T_{11} \end{bmatrix} = \begin{bmatrix} a & -b \\ b & a \end{bmatrix} \begin{bmatrix} T_1 \\ T_{w_0+1} \end{bmatrix}.$$

These are known as Givens rotations.

As illustrated in figure 2, in addition or as an alternative to the RAHT processing block 213 the encoder 110 may further comprise a processing block 208 ("Generate LOD") configured to encode attributes 100b using the Level-of-Details approach and a processing block 209 implementing a lifting operation. In an embodiment, the selection whether the processing block 213 or the processing blocks 208, 209 are used, may be performed by the encoder 110 and signalled in the attribute bitstream 120b.

In an embodiment, the (LOD) generation processing block 208 is configured to re-organize the points into a set of refinement levels $(R_l)_{l=0...L-1}$, according to a set of Euclidean distances $(d_l)_{l=0...L-1}$ specified, for instance, by a user. The distances $(d_l)_{l=0...L-1}$ should satisfy the following two conditions:

- $d_l < d_{l-1}$, and
- $d_{L-1} = 0$.

The re-ordering process is deterministic and operates on the quantized positions ordered according to the octree decoding process. It may be applied at both the encoder 110 and the decoder 130 side. More specifically, the re-ordering process implemented by the processing block 208 may comprise the following stages:

- First, all the points are marked as non-visited and the set of visited points, denoted as *V,* is set as empty.
- Iteratively, at each iteration *l*, the refinement level $R_l$ is generated as follows:

  ◦ Iteration is performed over all the points.
  ◦ If the current point has been visited, then it is ignored.
  ◦ Otherwise, the minimum distance D of the current point to the set *V* is computed.
  ◦ If D is strictly lower than $d_l$, then the current point is ignored.
  ◦ If D is higher or equal than $d_l$, then the current point is marked as visited and added to both $R_l$ and *V*.
  o This is repeated until all the points have been traversed.

- The level of detail I, $LOD_l$, is obtained by taking the union of the refinement levels $R_0$, $R_1$, ... ,$R_l$.
- This is repeated until all the LODs are generated or until all the vertices have been visited.

As will be appreciated, the LOD-based prediction strategy implemented by the processing block 208 makes points in lower LODs more influential since they are used more often for prediction. More specifically, let $w(P)$ be the influence weight associated with a point P. Then $w(P)$ may be computed by applying the following recursive procedure:

- Set $w(P) = 1$ for all points
- Traverse the points according to the inverse of the order defined by the LOD structure
- For every point $Q(i, j)$, update the weights of its neighbors $P \in \mathbb{V}(Q(i, j))$ as follows:

$$w(P) \leftarrow w(P) + w(Q(i,j),j)\ \alpha(P,Q(i,j)).$$

In an embodiment, the processing block 209 may implement an update operator that uses the prediction residuals $D(Q(i, j))$ to update the attribute values of LOD(j). More specifically, let $\Delta(P)$ be the set of points $Q(i, j)$ such that $P \in \mathbb{V}(Q(i, j))$. Then, the update operation for P implemented by the processing block 209 may be defined as follows:

$$Update(P) = \frac{\sum_{Q \in \Delta(P)}[\alpha(P,Q) \times w(Q) \times D(Q)]}{\sum_{Q \in \Delta(P)}[\alpha(P,Q) \times w(Q)]}$$

The encoder 110 may further comprise a processing block 211 ("Quantize coefficients") for quantizing the influence weights computed during the transform process. Those may be leveraged in order to guide the quantization process. More specifically, the coefficients associated with a point P are multiplied by a factor of $\sqrt{w(P)}$. An inverse scaling process by the same factor is applied after inverse quantization on the decoder 130 side. The scaling factors are completely determined by the reconstructed geometry and, thus, do not need to be encoded in the bitstream 120.

The encoder 110 may further comprise a processing block 212 ("Arithmetic encode") for encoding the quantized coefficients provided by processing block 211 and thereby generating the attribute bitstream 120b.

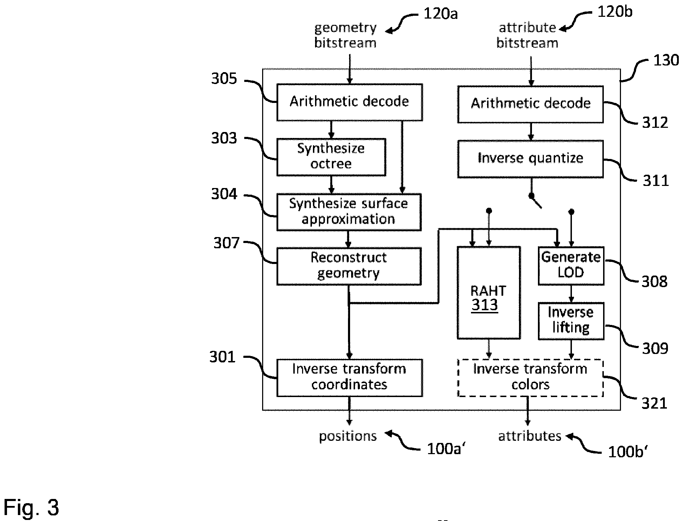

Figure 3 shows the decoder 130 according to an embodiment that is configured to generate decoded positions 100a' and attributes 100b', i.e. the reconstructed point cloud 100 based on the geometry bitstream 120a and attributes bitstream 120b (provided, for instance, by the encoder 110 of figure 2 based on the input point cloud 100). In an embodiment, the decoder 130 may comprise one or more of the processing blocks shown in figure 3, which may be implemented in hardware and/or software, for instance, by means of the processing circuitry 131 of the decoder shown in figure 1. As will be appreciated, many of the processing blocks of the decoder 130 may be identical or the inverse of the corresponding processing blocks of the encoder 110 shown in figure 2. Therefore, in the following mainly the differences between the decoder 130 shown in figure 3 and the encoder 110 shown in figure 2 will be described in more detail.

Processing blocks 305 and 312 of the decoder 130 receive the geometry bitstream 120a and the attribute bitstream 120b and perform arithmetic decoding. The results of the arithmetic decoding for the geometry bitstream 120a are further used by the processing block 303 to synthesize an octree. A processing block 304 ("Synthesize surface approximation") is configured to perform surface approximations in some of the parts of the synthesized tree. The processing blocks 303 and 304 operate as the processing blocks 203 and 204 of the encoder 110 described above. The difference between decoder-side and encoder-side steps is that for the decoder-side process decisions are taken in accordance with the contents of the bitstream 120a, 120b. Moreover, the processing block 307 ("Reconstruct geometry") is identical to the processing block 207 described above. The processing block 301 ("Inverse transform of coordinates") of the decoder 130 is configured to perform operations inverse to the operations performed by the processing block 201 of the encoder 110 so that the decoded positions 100a' match the positions 100a provided as one of the inputs to the decoder 110.

For decoding the attribute bitstream 120b the decoder 130 comprises an arithmetic decoding processing block 312 and an inverse quantization processing block 311, which is configured to restore decoded coefficients from their quantized representation that is signaled in the attribute bitstream 120b. The attribute transforms are applied in the same way as it is done by the encoder 120, i.e. the processing blocks 308, 309 and 313 of the decoder 130 are identical to the corresponding processing blocks 208, 209 and 213 of the encoder 110 shown in figure 2 and described above. The only difference is that the selection between the processing block 213 and the processing blocks 208, 209 is signaled in the attribute bitstream 120b.

Finally, the processing block 321 of the decoder 130 provides the mapping, which is inverse to the mapping provided by the processing block 221 of the encoder 110. Doing so, the decoded attributes 100b' are recovered from the attribute bitstream 120b.

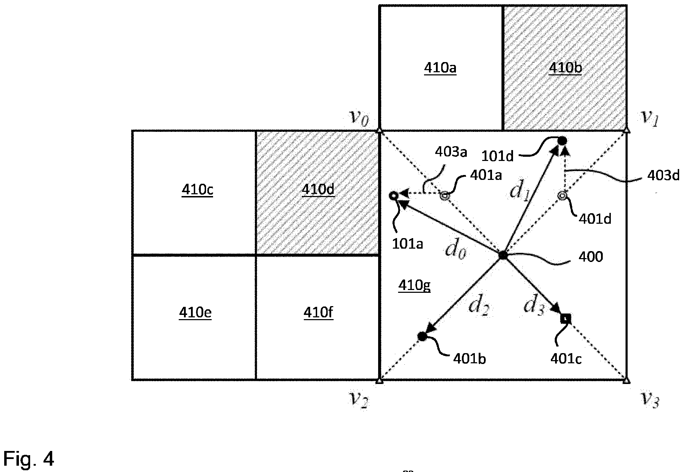

As will be described in more detail in the following under further reference in particular to figure 4, for compressing the point cloud 100, which is defined in a multi-dimensional space, e.g. a 2D or 3D space, the processing circuitry 111 of the encoding apparatus 110 is configured to partition the multi-dimensional space into a plurality of cells 410a-g. Each point of the point cloud 110, such as the exemplary points 101a,d has a position within one of the plurality of cells 410a-g. For instance, as illustrated in figure 4, the exemplary points 101a,d may be located in the exemplary cell 410g. Like the other cells shown in figure 4 the exemplary cell 410g comprises a central primary reference position 400 and at least one secondary reference position 401a-d. In the 2D embodiment shown in figure 4, the exemplary square shaped cell 410g comprises in addition to the primary reference position 400 four secondary reference positions 401a-d located in the respective quadrants of the square shaped quantization cell.

For the 2D embodiment illustrated in figure 4, where the plurality of cells 410a-g have a square or rectangular shape, the four secondary reference positions 401a-d may be located on a diagonal of the respective cell 410a-g in a respective quadrant thereof. In a further embodiment, where the point cloud 100 is a 3D structure, the cells may have a cube shape, wherein up to eight secondary reference positions are located on a respective diagonal of the cube-shaped cell in a respective octant thereof.

The processing circuitry 111 of the encoder 110 is further configured to determine for each point of the point cloud 100, such as the points 101a,d illustrated in figure 4 a refinement vector 403a,d. As will be described in more detail below, the refinement vector 403a,d defines depending on the position of the point 101a,d, i.e. whether it is located closer to the primary reference position 400 or closer to one of the secondary reference positions 401a-d, the difference between the position of the point 101a,d and the primary reference position 400 or the difference between the position of the point 101a,d and the respective secondary reference position 401a-d. For instance, in the embodiment shown in figure 4, the point 101a has the smallest distance to the secondary reference position 401a and, thus, the corresponding refinement vector 403a is defined by the difference between the position of the point 101a and the secondary reference position 401a. Likewise, the point 101d has the smallest distance to the secondary reference position 401d and, thus, the corresponding refinement vector 403d is defined by the difference between the position of the point 101d and the secondary reference position 401d.

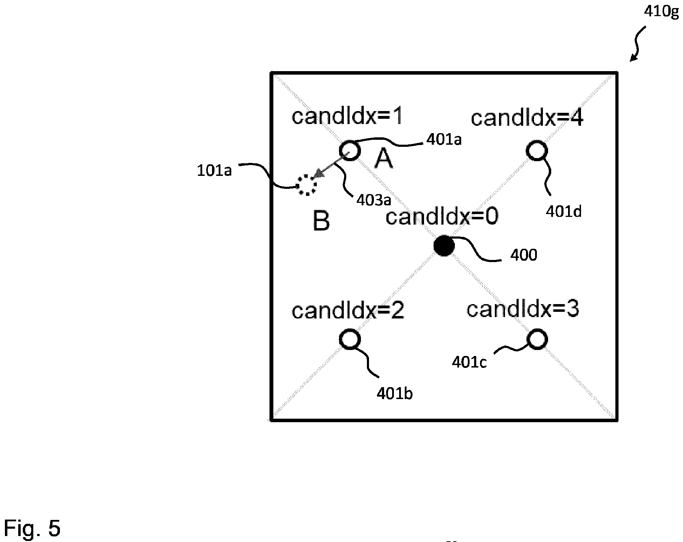

The processing circuitry 111 of the encoding apparatus 110 is further configured to encode the point cloud 100 for generating the bitstream 120 by encoding for each point of the point cloud 100, such as the exemplary points 101a,d shown in figure 4 depending on its position within the respective cell 410a-g either the refinement vector 403a,d together with an identifier of the primary reference position 400 or the refinement vector 403a,d together with the respective secondary reference position 401a-d. As illustrated in figure 5, in an embodiment, the encoding apparatus 110 may use as the identifier for the primary reference position 400 or the respective secondary reference position 401a-d a value of the identifier "candIdx", such as a value of "0", "1", "2", "3" or "4" for identifying either the primary reference position 400 or one of the four secondary reference positions 401a-d.

As already described above, the decoding apparatus 130 is configured to decompress the bitstream 120, including the geometry bitstream 120a into the reconstructed point cloud 100. To this end, the processing circuitry 131 of the decoding apparatus 130 is configured to decode for each point of the point cloud 100, such as the exemplary points 101a,d shown in figures 4 and 5 the identifier of the primary reference position 400 or the respective secondary reference position 401a-d within a respective cell 410g together with the respective refinement vector 403a,d. As already described above, the refinement vector 403a,d defines depending on the position of the point 101a,d either the difference between the position of the point 101a,d and the primary reference position 400 or the difference between the position of the point 101a,d and the respective secondary reference position 401a-d. The processing circuitry 131 of the decoding apparatus 130 is further configured to determine for each point 101a,d of the point cloud 100 the position of the point 101a,d by adding the decoded refinement vector 403a,d depending on the identifier either to the primary reference position 400 or to the respective secondary reference position 401a-d within a respective cell of the plurality of cells 410a-g.

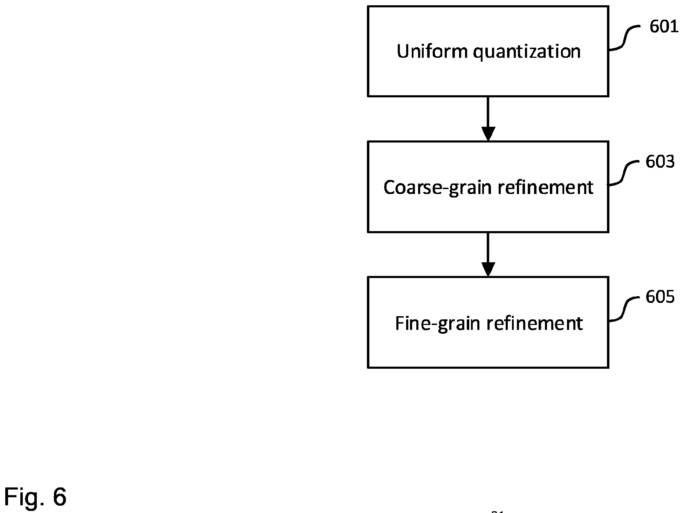

As illustrated in figure 6, the encoding apparatus 110 and the decoding apparatus 130 may be implemented to use different levels of refinement, namely a uniform quantization level 601, a coarse-grain refinement level 603 and a fine-grain refinement level 605. On the uniform quantization level all points of a cell 410g are mapped to the central primary reference position 400. For the coarse-grain refinement level 603 the points of the cell 410g depending on their respective position within the cell 410g may be mapped either to the central primary reference position 400 or to one of the four secondary reference positions 401a-d. The final fine-grain refinement level 605 comprises the determination of the respective refinement vectors 403a,d described above. In an embodiment, the encoding apparatus 110 and the decoding apparatus 130 may enable or disable the different refinement levels described above. In an embodiment, the encoding apparatus 110 is configured to indicate the refinement level used for compressing the point cloud 100 in the bitstream 120. In an embodiment, the encoding apparatus 110 may be configured to indicate within the bitstream 120 which of the cells 410a-g actually comprise points of the point cloud.

In an embodiment, each refinement vector 403a,d comprises a plurality of components and the processing circuitry 111 of the encoding apparatus 130 is configured to encode for each point 101a,d of the point cloud 100 the components of the refinement vector 403a,d. For instance, in the 2D case the refinement vector 403a,d may have the components $v_x$, $v_y$, while in the 3D case the refinement vector 403a,d may have the components $v_x$, $v_y$, $v_z$. As already described above, on the decoder side the fine grain refinement consists in parsing the components of the refinement vector for each of the coordinate axes from the bitstream 120 and using these values to shift (or (re-)map or refine the position of) the point to the position identified by the refinement vector.

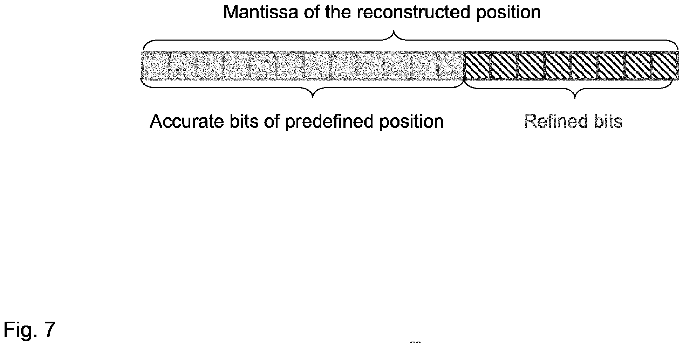

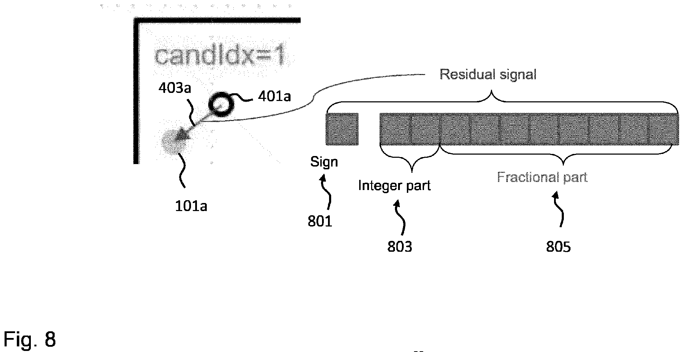

In an embodiment, each component $v_a$, $a \in \{x, y, z\}$ of the refinement vector 403a,d may be parsed from the bitstream 120 by parsing two parts, namely a sign bit 801 and a mantissa value, as illustrated in figures 7 and 8. In an embodiment, each component of the refinement vector 403a,d may comprises a sign bit 801, an integer part 803 and a fractional part 805, wherein the integer part 803 and the fractional part 805 define the mantissa value.

In an embodiment, the number of bits for the parsed mantissa value for a given coordinate axis $a$ may depend on the number of bits required to represent a coordinate $p_a$ of the predefined position being refined on the axis $a$. This dependency may be expressed in the follow way:

$$m_a = N - \lfloor \log_2 p_a \rfloor,$$

wherein $m_a$ denotes the number of bits required to encode the mantissa value of the refinement vector component and $N$ denotes the number of bits for a fixed-point representation of the output points. As will be appreciated, this embodiment makes advantageous use of a natural property of a fixed-point value that consists in a fixed number $N$ of bits allocated for both parts, namely the integer part 803 and the fractional part 805. Therefore, in this case, the number of bits required to represent the absolute value of a selected pre-defined point position also determine the maximum number of bits that could be refined at this step.

As already mentioned above, figure 8 illustrates the components of the residual signal, i.e. the portion of the bitstream 120 encoding the respective refinement vectors 403a,d, having a sign bit 801, an integer part and a fractional part. In an exemplary embodiment, the different components of this signal may be encoded differently. In an embodiment, the sign bit 801 may be encoded without using entropy coding or by using an equiprobable model for arithmetic coding. In an embodiment, the integer part 803 could be represented by a unary code, since smaller values are more probable than higher ones. In an embodiment, the fractional part 805 could be coded using a fixed-length code, with several context models specified for bits depending on their positions.

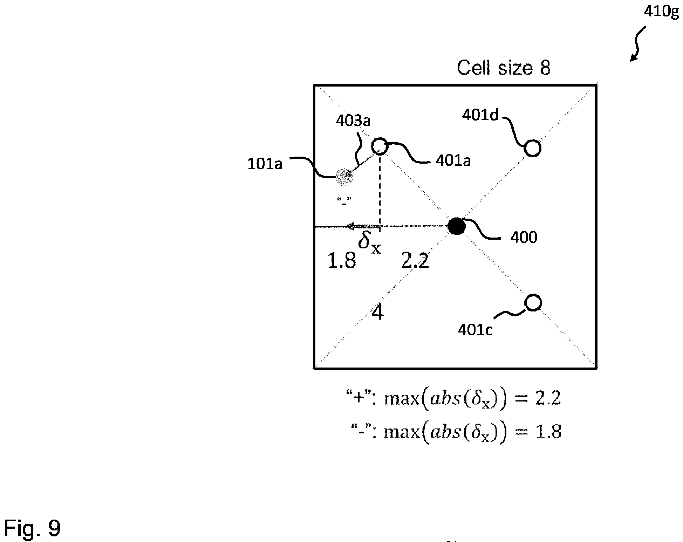

As illustrated in figure 9, the reason for a non-equal distribution of smaller and larger values of the integer part 803 of the respective component of a respective refinement vector 403a,d is that the maximum absolute value of the respective component $\delta_a$, $a \in \{x, y, z\}$ has restrictions with respect to its fractional part 805. For this reason, when the integer part of $\delta_a$ has its maximum value, the maximum value of the fractional part is limited.. For example, when it is known that the maximum value of $\delta_a$ is 2.4, there may be the following two cases: (1) in the case that the integer part of $\delta_a$ is equal to 2, the maximum value of the fractional part is 0.4; (2) in the case that the integer part of $\delta_a$ isless than

2, the maximum value of the fractional part is not restricted and equal to 0.9, i.e. 9. As will be appreciated, a fixed-point representation of the fractional part in these two different cases would have a different bit length.

Hence, for the case of a uniform distribution of points, the total number of valid values of the refinement vector component $\delta_a$ with the maximal value of the integer part 503 is smaller than the number of valid values of $\delta_a$ with the integer part 503 that is smaller than the maximum.

A projection of the secondary reference point 401a onto the axis $a$ splits the axis $a$ into non-equal parts, and depending on the sign value 801, the maximal value of the integer part 803 may be different. This is illustrated in figure 9 for an exemplary cell size equal to 8. For negative values of the refinement vector component $\delta_a$, the integer part 803 is within a range of [0,1], but for a positive $\delta_a$ value the integer part 803 is within a range of [0,2].

In another embodiment, the sign value 801 may be encoded in the bitstream 120 with a probability model that takes into account the difference between the maximum absolute values of the refinement vector components for positive and negative sign values.

As will be appreciated, embodiments of the encoding apparatus 110 and the decoding apparatus 130 discloses therein allow using different coding mechanisms, one of which is used to encode the integer part 803 of the position of a point (coarse-grain refinement), while a different coding mechanism is used for its fractional part 805 (fine-grain refinement). As described above, there may be a dependency between these mechanisms, namely in an embodiment the number of bits to be refined may be defined adaptively based on the number of significant bits in the exponent part of the floating point representation of the quantized position. As already described above, the refinement value, i.e. the refinement level for a pre-determined position within a cell may be encoded in the bitstream 120. In an embodiment, the number of bits signaled for the refinement value may depend on the absolute values of coordinates of the predefined position and the value of maximum error of the reconstructed position, wherein the maximum error is determined by the set of predefined positions and cell size/shape.

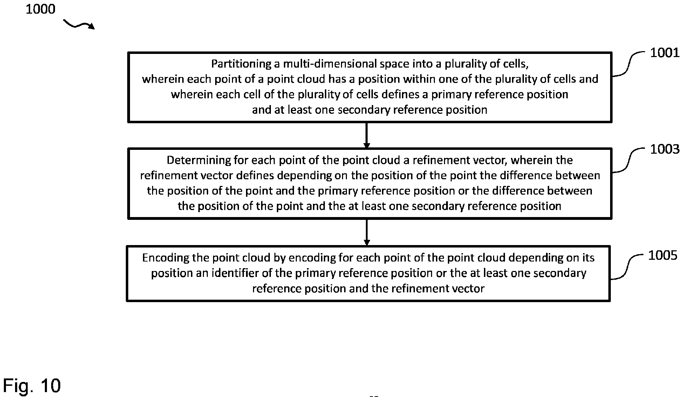

Figure 10 is a flow diagram illustrating an encoding method 1000 for compression of the point cloud 100 defined in a multi-dimensional space. The encoding method 1000 comprises the steps of:

partitioning 1001 the multi-dimensional space into a plurality of cells 410a-g, wherein each point 101a,d of the point cloud 100 has a position within one of the plurality of cells 410a-g and wherein each cell of the plurality of cells 410a-g defines a primary reference position 400 and at least one secondary reference position 401a-d;

determining 1003 for each point 101a,d of the point cloud 100 a refinement vector 403a,d, wherein the refinement vector 403a,d defines depending on the position of the point 101a,d the difference between the position of the point 101a,d and the primary reference position 400 or the difference between the position of the point 101a,d and the at least one secondary reference position 401a-d; and

encoding 1005 the point cloud 100 by encoding for each point 101a,d of the point cloud 100 depending on its position an identifier of the primary reference position 400 or the at least one secondary reference position 401a-d and the refinement vector 403a,d.

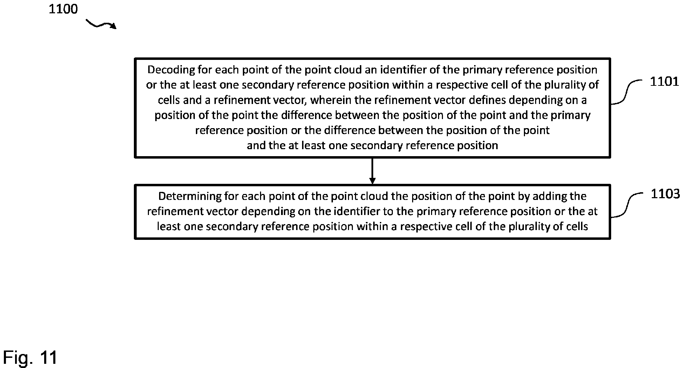

Figure 11 is a flow diagram illustrating a decoding method 1100 for decompression of the bitstream 120 into the point cloud 100 defined in a multi-dimensional space, wherein the multi-dimensional space is partitioned into the plurality of cells 410a-g, wherein each point 101a,d of the point cloud 100 has a position within one of the plurality of cells 410a-g and wherein each cell of the plurality of cells 410a-g defines a primary reference position 400 and at least one secondary reference position 401a-d, wherein the decoding method 1100 comprises:

decoding 1101 for each point 101a,d of the point cloud 100 an identifier of the primary reference position 400 or the at least one secondary reference position 401a-d within a respective cell of the plurality of cells 410a-g and a refinement vector 403a,d, wherein the refinement vector 403a,d defines depending on a position of the point 101a,d the difference between the position of the point 101a,d and the primary reference position 400 or the difference between the position of the point 101a,d and the at least one secondary reference position 401a-d; and

determining 1103 for each point 101a,d of the point cloud 100 the position of the point 101a,d by adding the refinement vector 403a,d depending on the identifier to the primary reference position 400 or the at least one secondary reference position 401a-d within a respective cell of the plurality of cells 410a-g.

Any of the embodiments or aspects may also comprise implementations, wherein a refinement vector is determined for at least one point of the point cloud (e.g. not necessarily for each point or all points of the point cloud), and/or wherein not necessarily each cell but at least one cell of the plurality of cells defines a primary position and a secondary position (e.g. there may be cells with only a primary reference point).

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

**Claims**

1. An encoding apparatus (110) for compression of a point cloud (100) in a multi-dimensional space, wherein the encoding apparatus (110) comprises:

   a processing circuitry (111) configured to partition the multi-dimensional space into a plurality of cells (410a-g), wherein each point (101a,d) of the point cloud (110) has a position within one of the plurality of cells (410a-g) and wherein each cell of the plurality of cells (410a-g) defines a primary reference position (400) and at least one secondary reference position (401a-d);
   **characterized in that**
   the processing circuitry (111) is further configured to determine for each point (101a,d) of the point cloud (100) a refinement vector (403a,d), wherein the refinement vector (403a,d) defines depending on the position of the point (101a,d) the difference between the position of the point (101a,d) and the primary reference position (400) or the difference between the position of the point (101a,d) and the at least one secondary reference position (401a-d);
   wherein the processing circuitry is (111) further configured to encode the point cloud (100) by encoding for each point (101a,d) of the point cloud (100) depending on its position an identifier of the primary reference position (400) or the at least one secondary reference position (401a-d) and the refinement vector (403a,d).

2. The encoding apparatus (110) of claim 1, wherein the processing circuitry (111) is configured to determine for each point (101a,d) of the point cloud (100) either the identifier of the primary reference position (400) or the at least one secondary reference position (401a-d) and the refinement vector (403a,d) based on the distance of the position of the point (101a,d) to the primary reference position (400) and the distance of the position of the point (101a,d) to the at least one secondary reference position (401a-d).

3. The encoding apparatus (110) of claim 1 or 2, wherein each refinement vector (403a,d) comprises a plurality of components and wherein the processing circuitry (111) is configured to encode for each point (101a,d) of the point cloud (100) the components of the refinement vector (403a,d).

4. The encoding apparatus (110) of claim 3, wherein for each point (101a,d) of the point cloud (100) each component of the refinement vector (403a,d) comprises a mantissa value and wherein the processing circuitry (111) is configured to encode the mantissa value with a number of bits, wherein the number of bits depends on a number of bits required to represent a coordinate of the at least one secondary reference position (401a-d) and

   wherein, for example, the number of bits of the mantissa value $m_a$ depends on the number of bits to represent the coordinate $p_a$ of the at least one secondary reference position (401a-d) according to the following equation:

$$m_a = N - \lfloor \log_2 p_a \rfloor,$$

wherein N denotes the number of bits for a fixed-point representation of the point (101a,d) of the point cloud (100).

5. The encoding apparatus (110) of any one of claims 3 or 4, wherein for each point (101a,d) of the point cloud (100) each component of the refinement vector (403a,d) comprises a sign (801), an integer part (803) and a fractional part (805).

6. The encoding apparatus (110) of claim 5, wherein the processing circuitry (111) is configured to encode the sign (801) by using an equiprobable model for arithmetic coding.

7. The encoding apparatus (110) of claim 5, wherein the processing circuitry (111) is configured to encode the sign (801) using a probability model taking into account a difference of the maximum absolute values of the components for positive and negative sign values.

8. The encoding apparatus (110) of any one of claims 5 to 7, wherein the processing circuitry (111) is configured to encode the integer part (803) using a unary code.

9. The encoding apparatus (110) of any one of claims 5 to 8, wherein the processing circuitry (111) is configured to encode the fractional part (805) using a fixed-length code.

10. The encoding apparatus (110) of any one of the preceding claims, wherein the primary reference position (400) is located at a geometric center of each cell (410a-g).

11. The encoding apparatus (110) of any one of the preceding claims, wherein the multi-dimensional space is a 2D space and each cell (410a-g) has a square or rectangular shape and wherein the at least secondary reference position (401a-d) is located on a diagonal of the cell (410a-g) in a respective quadrant of the cell (410a-g); or wherein the multi-dimensional space is a 3D space and wherein the at least one cell has a cube shape, wherein at least one of the one or more secondary reference positions is located on a diagonal of the cell in a respective octant of the cell.

12. An encoding method (1000) for compression of a point cloud (100) in a multi-dimensional space, wherein the encoding method (1000) comprises:

   partitioning (1001) the multi-dimensional space into a plurality of cells (410a-g), wherein each point (101a,d) of the point cloud (100) has a position within one of the plurality of cells (410a-g) and wherein each cell of the plurality of cells (410a-g) defines a primary reference position (400) and at least one secondary reference position (401a-d);
   **characterized by**
   determining (1003) for each point (101a,d) of the point cloud (100) a refinement vector (403a,d), wherein the refinement vector (403a,d) defines depending on the position of the point (101a,d) the difference between the position of the point (101a,d) and the primary reference position (400) or the difference between the position of the point (101a,d) and the at least one secondary reference position (401a-d); and
   encoding (1005) the point cloud (100) by encoding for each point (101a,d) of the point cloud (100) depending on its position an identifier of the primary reference position (400) or the at least one secondary reference position (401a-d) and the refinement vector (403a,d).

13. A decoding apparatus (130) for decompression of a bitstream (120) into a point cloud (100) in a multi-dimensional space, wherein the multi-dimensional space is partitioned into a plurality of cells (410a-g), wherein each point (110a,d) of the point cloud (100) has a position within one of the plurality of cells (410a-g) and wherein each cell of the plurality of cells (410a-g) defines a primary reference position (400) and at least one secondary reference position (401a-d), wherein the decoding apparatus (130) is **characterized by**

   a processing circuitry (131) configured to decode for each point (101a,d) of the point cloud (100) an identifier of the primary reference position (400) or the at least one secondary reference position (401a-d) within a respective cell of the plurality of cells (410a-g) and a refinement vector (403a,d), wherein the refinement vector (403a,d) defines depending on a position of the point (101a,d) the difference between the position of the point

(101a,d) and the primary reference position (400) or the difference between the position of the point (101a,d) and the at least one secondary reference position (401a-d);

wherein the processing circuitry (131) is further configured to determine for each point (101a,d) of the point cloud (101) the position of the point (101a,d) by adding the refinement vector (403a,d) depending on the identifier to the primary reference position (400) or the at least one secondary reference position (401a-d) within a respective cell of the plurality of cells (410a-g).

14. A decoding method (1100) for decompression of a bitstream (120) into a point cloud (100) in a multi-dimensional space, wherein the multi-dimensional space is partitioned into a plurality of cells (410a-g), wherein each point (101a,d) of the point cloud (100) has a position within one of the plurality of cells (410a-g) and wherein each cell of the plurality of cells (410a-g) defines a primary reference position (400) and at least one secondary reference position (401a-d), wherein the decoding method (1100) is **characterized by**

decoding (1101) for each point (101a,d) of the point cloud (100) an identifier of the primary reference position (400) or the at least one secondary reference position (401a-d) within a respective cell of the plurality of cells (410a-g) and a refinement vector (403a,d), wherein the refinement vector (403a,d) defines depending on a position of the point (101a,d) the difference between the position of the point (101a,d) and the primary reference position (400) or the difference between the position of the point (101a,d) and the at least one secondary reference position (401a-d); and

determining (1103) for each point (101a,d) of the point cloud (100) the position of the point (101a,d) by adding the refinement vector (403a,d) depending on the identifier to the primary reference position (400) or the at least one secondary reference position (401a-d) within a respective cell of the plurality of cells (410a-g).

15. A computer program product comprising a non-transitory computer-readable storage medium for storing program code which causes a computer or a processor to perform the method (1000) of claim 12 or the method (1100) of claim 14 when the program code is executed by the computer or the processor.

**Patentansprüche**

1. Codiervorrichtung (110) für die Komprimierung einer Punktwolke (100) in einem mehrdimensionalen Raum, wobei die Codiervorrichtung (110) Folgendes umfasst:

eine Verarbeitungsschaltung (111), die dazu konfiguriert ist, den mehrdimensionalen Raum in eine Vielzahl von Zellen (410a-g) zu unterteilen, wobei jeder Punkt (101a, d) der Punktwolke (110) eine Position innerhalb einer der Vielzahl von Zellen (410a-g) hat und wobei jede Zelle der Vielzahl von Zellen (410a-g) eine primäre Referenzposition (400) und mindestens eine sekundäre Referenzposition (401a-d) definiert;
**dadurch gekennzeichnet, dass**
die Verarbeitungsschaltung (111) ferner dazu konfiguriert ist, für jeden Punkt (101a, d) der Punktwolke (100) einen Verfeinerungsvektor (403a, d) zu bestimmen, wobei der Verfeinerungsvektor (403a, d) abhängig von der Position des Punktes (101a, d) die Differenz zwischen der Position des Punktes (101a, d) und der primären Referenzposition (400) oder die Differenz zwischen der Position des Punktes (101a, d) und der mindestens einen sekundären Referenzposition (401a-d) definiert;
wobei die Verarbeitungsschaltung (111) ferner dazu konfiguriert ist, die Punktwolke (100) zu codieren, indem sie für jeden Punkt (101a, d) der Punktwolke (100) abhängig von seiner Position eine Kennung der primären Referenzposition (400) oder der mindestens einen sekundären Referenzposition (401a-d) und den Verfeinerungsvektor (403a, d) codiert.

2. Codiervorrichtung (110) nach Anspruch 1, wobei die Verarbeitungsschaltung (111) dazu konfiguriert ist, für jeden Punkt (101a, d) der Punktwolke (100) entweder die Kennung der primären Referenzposition (400) oder der mindestens einen sekundären Referenzposition (401a-d) und den Verfeinerungsvektor (403a, d) basierend auf dem Abstand der Position des Punktes (101a, d) zu der primären Referenzposition (400) und dem Abstand der Position des Punktes (101a, d) zu der mindestens einen sekundären Referenzposition (401a-d) zu bestimmen.

3. Codiervorrichtung (110) nach Anspruch 1 oder 2, wobei jeder Verfeinerungsvektor (403a, d) eine Vielzahl von Komponenten umfasst und wobei die Verarbeitungsschaltung (111) dazu konfiguriert ist, für jeden Punkt (101a, d) der Punktwolke (100) die Komponenten des Verfeinerungsvektors (403a, d) zu codieren.

4.  Codiervorrichtung (110) nach Anspruch 3, wobei für jeden Punkt (101a, d) der Punktwolke (100) jede Komponente des Verfeinerungsvektors (403a, d) einen Mantissenwert umfasst und wobei die Verarbeitungsschaltung (111) dazu konfiguriert ist, den Mantissenwert mit einer Bitanzahl zu codieren, wobei die Bitanzahl von einer Bitanzahl abhängt, die erforderlich ist, um eine Koordinate der mindestens einen sekundären Referenzposition (401a-d) darzustellen, und

wobei beispielsweise die Bitanzahl des Mantissenwerts $m_a$ von der Bitanzahl zum Darstellen der Koordinate $p_a$ der mindestens einen sekundären Referenzposition (401a-d) gemäß der folgenden Gleichung abhängt:

$$m_a = N - \lfloor \log_2 p_a \rfloor,$$

wobei $N$ die Bitanzahl für eine Festkommadarstellung des Punktes (101a, d) der Punktwolke (100) bezeichnet.

5.  Codiervorrichtung (110) nach einem der Ansprüche 3 oder 4, wobei für jeden Punkt (101a, d) der Punktwolke (100) jede Komponente des Verfeinerungsvektors (403a, d) ein Vorzeichen (801), einen ganzzahligen Anteil (803) und einen Nachkommaanteil (805) umfasst.

6.  Codiervorrichtung (110) nach Anspruch 5, wobei die Verarbeitungsschaltung (111) dazu konfiguriert ist, das Vorzeichen (801) zu codieren, indem ein gleichwahrscheinliches Modell für die arithmetische Codierung verwendet wird.

7.  Codiervorrichtung (110) nach Anspruch 5, wobei die Verarbeitungsschaltung (111) dazu konfiguriert ist, das Vorzeichen (801) zu codieren, indem ein Wahrscheinlichkeitsmodell verwendet wird, das eine Differenz der maximalen Absolutwerte der Komponenten für Werte mit positivem und negativem Vorzeichen berücksichtigt.

8.  Codiervorrichtung (110) nach einem der Ansprüche 5 bis 7, wobei die Verarbeitungsschaltung (111) dazu konfiguriert ist, den ganzzahligen Anteil (803) zu codieren, indem ein unärer Code verwendet wird.

9.  Codiervorrichtung (110) nach einem der Ansprüche 5 bis 8, wobei die Verarbeitungsschaltung (111) dazu konfiguriert ist, den Nachkommaanteil (805) zu codieren, indem ein Code fester Länge verwendet wird.

10. Codiervorrichtung (110) nach einem der vorhergehenden Ansprüche, wobei die primäre Referenzposition (400) in einem geometrischen Mittelpunkt jeder Zelle (410a-g) liegt.

11. Codiervorrichtung (110) nach einem der vorhergehenden Ansprüche, wobei der mehrdimensionale Raum ein 2D-Raum ist und jede Zelle (410a-g) eine quadratische oder rechteckige Form aufweist und wobei die mindestens sekundäre Referenzposition (401a-d ) auf einer Diagonale der Zelle (410a-g) in einem jeweiligen Quadranten der Zelle (410a-g) liegt; oder
    wobei der mehrdimensionale Raum ein 3D-Raum ist und wobei die mindestens eine Zelle eine Würfelform aufweist, wobei mindestens eine der einen oder mehreren sekundären Referenzpositionen auf einer Diagonale der Zelle in einem jeweiligen Oktanten der Zelle liegt.

12. Codierverfahren (1000) zur Komprimierung einer Punktwolke (100) in einem mehrdimensionalen Raum, wobei das Codierverfahren (1000) Folgendes umfasst:

    Unterteilen (1001) des mehrdimensionalen Raums in eine Vielzahl von Zellen (410a-g), wobei jeder Punkt (101a, d) der Punktwolke (100) eine Position innerhalb einer der Vielzahl von Zellen (410ag) hat und wobei jede Zelle der Vielzahl von Zellen (410a-g) eine primäre Referenzposition (400) und mindestens eine sekundäre Referenzposition (401a-d) definiert;
    **gekennzeichnet durch**
    Bestimmen (1003), für jeden Punkt (101a, d) der Punktwolke (100), eines Verfeinerungsvektors (403a, d), wobei der Verfeinerungsvektor (403a, d) abhängig von der Position des Punktes (101a, d) die Differenz zwischen der Position des Punktes (101a, d) und der primären Referenzposition (400) oder die Differenz zwischen der Position des Punktes (101a, d) und der mindestens einen sekundären Referenzposition (401a-d) definiert; und
    Codieren (1005) der Punktwolke (100), indem für jeden Punkt (101a, d) der Punktwolke (100) abhängig von seiner Position eine Kennung der primären Referenzposition (400) oder der mindestens einen sekundären Referenzposition (401a-d) und der Verfeinerungsvektor (403a, d) codiert werden.

**13.** Decodiervorrichtung (130) zur Dekomprimierung eines Bitstroms (120) in eine Punktwolke (100) in einem mehrdimensionalen Raum, wobei der mehrdimensionale Raum in eine Vielzahl von Zellen (410ag) unterteilt ist, wobei jeder Punkt (110a, d) der Punktwolke (100) eine Position innerhalb einer der Vielzahl von Zellen (410a-g) hat und wobei jede Zelle der Vielzahl von Zellen (410a-g) eine primäre Referenzposition (400) und mindestens eine sekundäre Referenzposition (401a-d) definiert, wobei die Decodiervorrichtung (130) durch Folgendes gekennzeichnet ist:

eine Verarbeitungsschaltung (131), die dazu konfiguriert ist, für jeden Punkt (101a, d) der Punktwolke (100) eine Kennung der primären Referenzposition (400) oder der mindestens einen sekundären Referenzposition (401a-d) innerhalb einer jeweiligen Zelle der Vielzahl von Zellen (410a-g) und einen Verfeinerungsvektor (403a, d) zu decodieren, wobei der Verfeinerungsvektor (403a, d) abhängig von einer Position des Punktes (101a, d) die Differenz zwischen der Position des Punktes (101a, d) und der primären Referenzposition (400) oder die Differenz zwischen der Position des Punktes (101a, d) und der mindestens einen sekundären Referenzposition (401a-d) definiert;

wobei die Verarbeitungsschaltung (131) ferner dazu konfiguriert ist, für jeden Punkt (101a, d) der Punktwolke (101) die Position des Punktes (101a, d) zu bestimmen, indem sie den Verfeinerungsvektor (403a, d) abhängig von der Kennung zu der primären Referenzposition (400) oder der mindestens einen sekundären Referenzposition (401a-d) innerhalb einer jeweiligen Zelle der Vielzahl von Zellen (410a-g) hinzufügt.

**14.** Decodierverfahren (1100) zur Dekomprimierung eines Bitstroms (120) in eine Punktwolke (100) in einem mehrdimensionalen Raum, wobei der mehrdimensionale Raum in eine Vielzahl von Zellen (410ag) unterteilt ist, wobei jeder Punkt (101a, d) der Punktwolke (100) eine Position innerhalb einer der Vielzahl von Zellen (410a-g) hat und wobei jede Zelle der Vielzahl von Zellen (410a-g) eine primäre Referenzposition (400) und mindestens eine sekundäre Referenzposition (401a-d) definiert, wobei das Decodierverfahren (1100) durch Folgendes gekennzeichnet ist:

Decodieren (1101), für jeden Punkt (101a, d) der Punktwolke (100), einer Kennung der primären Referenzposition (400) oder der mindestens einen sekundären Referenzposition (401a-d) innerhalb einer jeweiligen Zelle der Vielzahl von Zellen (410a-g) und eines Verfeinerungsvektors (403a, d), wobei der Verfeinerungsvektor (403a, d) abhängig von einer Position des Punktes (101a, d) die Differenz zwischen der Position des Punktes (101a, d) und der primären Referenzposition (400) oder die Differenz zwischen der Position des Punktes (101a, d) und der mindestens einen sekundären Referenzposition (401a-d) definiert; und

Bestimmen (1103), für jeden Punkt (101a, d) der Punktwolke (100), der Position des Punktes (101a, d), indem der Verfeinerungsvektor (403a, d) abhängig von der Kennung zu der primären Referenzposition (400) oder der mindestens einen sekundären Referenzposition (401a-d) innerhalb einer jeweiligen Zelle der Vielzahl von Zellen (410ag) hinzufügt wird.

**15.** Computerprogrammprodukt, umfassend ein nichtflüchtiges computerlesbares Speichermedium zum Speichern von Programmcode, der einen Computer oder einen Prozessor dazu veranlasst, das Verfahren (1000) nach Anspruch 12 oder das Verfahren (1100) nach Anspruch 14 durchzuführen, wenn der Programmcode durch den Computer oder den Prozessor ausgeführt wird.

**Revendications**

**1.** Appareil de codage (110) pour la compression d'un nuage à points (100) dans un espace multidimensionnel, dans lequel l'appareil de codage (110) comprend :

des circuits de traitement (111) configurés pour diviser l'espace multidimensionnel en une pluralité de cellules (410a-g), dans lequel chaque point (101a,d) du nuage à points (110) a une position dans l'une de la pluralité de cellules (410a-g) et dans lequel chaque cellule de la pluralité de cellules (410a-g) définit une position de référence primaire (400) et au moins une position de référence secondaire (401a-d) ;
**caractérisé en ce que**
les circuits de traitement (111) sont en outre configurés pour déterminer, pour chaque point (101a,d) du nuage à points (100), un vecteur de raffinement (403a,d), dans lequel le vecteur de raffinement (403a,d) définit, en fonction de la position du point (101a,d), la différence entre la position du point (101a,d) et la position de référence primaire (400) ou la différence entre la position du point (101a,d) et l'au moins une position de référence secondaire (401a-d) ;
dans lequel les circuits de traitement (111) sont en outre configurés pour coder le nuage à points (100) en codant, pour chaque point (101a,d) du nuage à points (100) en fonction de sa position, un identifiant de la position de référence primaire (400) ou l'au moins une position de référence secondaire (401ad) et le vecteur de raffinement (403a,d).

2. Appareil de codage (110) selon la revendication 1, dans lequel les circuits de traitement (111) sont configurés pour déterminer, pour chaque point (101a,d) du nuage à points (100),soit l'identifiant de la position de référence primaire (400), soit l'au moins une position de référence secondaire (401a-d) et le vecteur de raffinement (403a,d) sur la base de la distance de la position du point (101a,d) à la position de référence primaire (400) et de la distance de la position du point (101a,d) à l'au moins une position de référence secondaire (401a-d).

3. Appareil de codage (110) selon la revendication 1 ou 2, dans lequel chaque vecteur de raffinement (403a,d) comprend une pluralité de composants et dans lequel les circuits de traitement (111) sont configurés pour coder, pour chaque point (101a,d) du nuage à points (100), les composantes du vecteur de raffinement (403a,d).

4. Appareil de codage (110) selon la revendication 3, dans lequel pour chaque point (101a,d) du nuage à points (100), chaque composante du vecteur de raffinement (403a,d) comprend une valeur de mantisse et dans lequel les circuits de traitement (111) sont configurés pour coder la valeur de mantisse avec un certain nombre de bits, dans lequel le nombre de bits dépend d'un nombre de bits requis pour représenter une coordonnée de l'au moins une position de référence secondaire (401a-d), et

dans lequel, par exemple, le nombre de bits de la valeur de mantisse $m_a$ dépend du nombre de bits pour représenter la coordonnée $p_a$ de l'au moins une position de référence secondaire (401a-d) selon l'équation suivante :

$$m_a = N - \lfloor \log_2 p_a \rfloor,$$

dans lequel $N$ désigne le nombre de bits pour une représentation en virgule fixe du point (101a,d) du nuage à points (100).

5. Appareil de codage (110) selon l'une quelconque des revendications 3 ou 4, dans lequel pour chaque point (101a,d) du nuage à points (100) chaque composante du vecteur de raffinement (403a,d) comprend un signe (801), une partie entière (803) et une partie fractionnaire (805).

6. Appareil de codage (110) selon la revendication 5, dans lequel les circuits de traitement (111) sont configurés pour coder le signe (801) à l'aide d'un modèle équiprobable pour le codage arithmétique.

7. Appareil de codage (110) selon la revendication 5, dans lequel les circuits de traitement (111) sont configurés pour coder le signe (801) à l'aide d'un modèle de probabilité prenant en compte une différence des valeurs absolues maximales des composantes pour des valeurs de signe positif et négatif.

8. Appareil de codage (110) selon l'une quelconque des revendications 5 à 7, dans lequel les circuits de traitement (111) sont configurés pour coder la partie entière (803) à l'aide d'un code unaire.

9. Appareil de codage (110) selon l'une quelconque des revendications 5 à 8, dans lequel les circuits de traitement (111) sont configurés pour coder la partie fractionnaire (805) à l'aide d'un code de longueur fixe.

10. Appareil de codage (110) selon l'une quelconque des revendications précédentes, dans lequel la position de référence primaire (400) est située au centre géométrique de chaque cellule (410a-g).

11. Appareil de codage (110) selon l'une quelconque des revendications précédentes, dans lequel l'espace multidimensionnel est un espace 2D et chaque cellule (410a-g) a une forme carrée ou rectangulaire et dans lequel l'au moins une position de référence secondaire (401a-d) est située sur une diagonale de la cellule (410a-g) dans un quadrant respectif de la cellule (410a-g) ; ou
dans lequel l'espace multidimensionnel est un espace 3D et dans lequel l'au moins une cellule a une forme de cube, dans lequel au moins l'une de l'une ou des plusieurs positions de référence secondaires est située sur une diagonale de la cellule dans un octant respectif de la cellule.

12. Procédé de codage (1000) pour la compression d'un nuage à points (100) dans un espace multidimensionnel, dans lequel le procédé de codage (1000) comprend :

la division (1001) de l'espace multidimensionnel en une pluralité de cellules (410a-g), dans lequel chaque point (101a,d) du nuage à points (100) a une position dans l'une de la pluralité de cellules (410a-g) et dans lequel chaque cellule de la pluralité de cellules (410a-g) définit une position de référence primaire (400) et au moins une position de référence secondaire (401a-d) ;
**caractérisé par**
la détermination (1003), pour chaque point (101a,d) du nuage à points (100), d'un vecteur de raffinement (403a,d), dans lequel le vecteur de raffinement (403a,d) définit, en fonction de la position du point (101a,d), la différence entre la position du point (101a,d) et la position de référence primaire (400) ou la différence entre la position du point (101a,d) et l'au moins une position de référence secondaire (401a-d) ;
le codage (1005) du nuage à points (100) en codant, pour chaque point (101a,d) du nuage à points (100) en fonction de sa position, un identifiant de la position de référence primaire (400) ou l'au moins une position de référence secondaire (401ad) et le vecteur de raffinement (403a,d).

13. Appareil de décodage (130) pour la décompression d'un flux binaire (120) en un nuage à points (100) dans un espace multidimensionnel, dans lequel l'espace multidimensionnel est divisé en une pluralité de cellules (410a-g), dans lequel chaque point (110a,d) du nuage à points (100) a une position dans l'une de la pluralité de cellules (410a-g) et dans lequel chaque cellule de la pluralité de cellules (410a-g) définit une position de référence primaire (400) et au moins une position de référence secondaire (401a-d), dans lequel l'appareil de décodage (130) est **caractérisé par**

des circuits de traitement (131) configurés pour décoder, pour chaque point (101a,d) du nuage à points (100), un identifiant de la position de référence primaire (400) ou l'au moins une position de référence secondaire (401a-d) dans une cellule respective de la pluralité de cellules (410a-g) et un vecteur de raffinement (403a,d), dans lequel le vecteur de raffinement (403a,d) définit, en fonction d'une position du point (101a,d), la différence entre la position du point (101a,d) et la position de référence primaire (400) ou la différence entre la position du point (101a,d) et l'au moins une position de référence secondaire (401a-d) ;
dans lequel les circuits de traitement (131) sont en outre configurés pour déterminer, pour chaque point (101a,d) du nuage à points (101), la position du point (101a,d) en ajoutant le vecteur de raffinement (403a,d) en fonction de l'identifiant à la position de référence primaire (400) ou l'au moins une position de référence secondaire (401a-d) dans une cellule respective de la pluralité de cellules (410a-g).

14. Procédé de décodage (1100) pour la décompression d'un flux binaire (120) en un nuage à points (100) dans un espace multidimensionnel, dans lequel l'espace multidimensionnel est divisé en une pluralité de cellules (410a-g), dans lequel chaque point (101a,d) du nuage à points (100) a une position dans l'une de la pluralité de cellules (410a-g) et dans lequel chaque cellule de la pluralité de cellules (410a-g) définit une position de référence primaire (400) et au moins une position de référence secondaire (401a-d), dans lequel le procédé de décodage (1100) est **caractérisé par**

le décodage (1101), pour chaque point (101a,d) du nuage à points (100), d'un identifiant de la position de référence primaire (400) ou l'au moins une position de référence secondaire (401ad) dans une cellule respective de la pluralité de cellules (410a-g) et d'un vecteur de raffinement (403a,d), dans lequel le vecteur de raffinement (403a,d) définit, en fonction d'une position du point (101a,d), la différence entre la position du point (101a,d) et la position de référence primaire (400) ou la différence entre la position du point (101a,d) et l'au moins une position de référence secondaire (401a-d) ; et
la détermination (1103), pour chaque point (101a,d) du nuage à points (100), de la position du point (101a,d) en ajoutant le vecteur de raffinement (403a,d) en fonction de l'identifiant à la position de référence primaire (400) ou l'au moins une position de référence secondaire (401a-d) dans une cellule respective de la pluralité de cellules (410a-g).

15. Produit-programme informatique comprenant un support de stockage non transitoire lisible par ordinateur pour stocker un code de programme qui amène un ordinateur ou un processeur à réaliser le procédé (1000) selon la revendication 12 ou le procédé (1100) selon la revendication 14 lorsque le code de programme est exécuté par l'ordinateur ou le processeur.

**Fig. 1**

Fig. 2

Fig. 3

Fig. 4

Fig. 5

Uniform quantization — 601

Coarse-grain refinement — 603

Fine-grain refinement — 605

Fig. 6

Mantissa of the reconstructed position

Accurate bits of predefined position          Refined bits

Fig. 7

Fig. 8

$$\text{“+”: } \max\bigl(abs(\delta_x)\bigr) = 2.2$$
$$\text{“-”: } \max\bigl(abs(\delta_x)\bigr) = 1.8$$

Fig. 9

**1000**

| Partitioning a multi-dimensional space into a plurality of cells, wherein each point of a point cloud has a position within one of the plurality of cells and wherein each cell of the plurality of cells defines a primary reference position and at least one secondary reference position | — 1001 |

↓

| Determining for each point of the point cloud a refinement vector, wherein the refinement vector defines depending on the position of the point the difference between the position of the point and the primary reference position or the difference between the position of the point and the at least one secondary reference position | — 1003 |

↓

| Encoding the point cloud by encoding for each point of the point cloud depending on its position an identifier of the primary reference position or the at least one secondary reference position and the refinement vector | — 1005 |

Fig. 10

1100

Decoding for each point of the point cloud an identifier of the primary reference position or the at least one secondary reference position within a respective cell of the plurality of cells and a refinement vector, wherein the refinement vector defines depending on a position of the point the difference between the position of the point and the primary reference position or the difference between the position of the point and the at least one secondary reference position — 1101

Determining for each point of the point cloud the position of the point by adding the refinement vector depending on the identifier to the primary reference position or the at least one secondary reference position within a respective cell of the plurality of cells — 1103

Fig. 11

**EP 4 244 813 B1**

## REFERENCES CITED IN THE DESCRIPTION

**Non-patent literature cited in the description**

- **JULIUS KAMMERL et al.** Real-time compression of point cloud streams. *Robostics and automation conference paper,* 14 May 2012